# EUROPÄISCHE PATENTSCHRIFT

(11) **EP 4 161 329 B1**
(45) Veröffentlichungstag und Bekanntmachung des Hinweises auf die Patenterteilung: **21.02.2024**
(21) Anmeldenummer: 21727836.5
(22) Anmeldetag: 20.05.2021
(51) Int. Cl.: A47J 43/044, A47J 43/07, A47J 43/08

(54) **LEBENSMITTELBEARBEITUNGSVORRICHTUNG**
FOOD PROCESSING DEVICE
DISPOSITIF DE TRAITEMENT DES ALIMENTS

(30) Priorität: 03.06.2020 EP 20382477
(43) Veröffentlichungstag der Anmeldung: 12.04.2023
(73) Patentinhaber: BSH Hausgeräte GmbH, 81739 München (DE)
(72) Erfinder: BODE, Sophie, 81547 München (DE); CAMAÑES VERA, Victor, 50003 Zaragoza (ES); DUDARENKA, Alena, 80797 München (DE); DZIEBOWSKI, Sabine, 81541 München (DE); HERNANDEZ BLASCO, Pablo Jesus, 50019 Zaragoza (ES); MIR BEL, Jorge, 50019 Zaragoza (ES); PARRA BORDERÍAS, Maria, 50006 Zaragoza (ES); RODRIGUEZ LARROSA, Agostina, 50011 Zaragoza (ES); VALEAU MARTIN, David, 50009 Zaragoza (ES); VILLANUEVA VALERO, Beatriz, 50011 Zaragoza (ES)
(86) Internationale Anmeldenummer: PCT/EP2021/063452
(87) Internationale Veröffentlichungsnummer: WO 2021/244858

(56) Entgegenhaltungen:
- EP-A1- 2 394 548
- EP-A1- 3 626 138
- WO-A1-2007/128153
- WO-A1-2020/052817
- US-A- 3 635 147
- US-A1- 2013 186 286
- US-A1- 2016 015 218

## Beschreibung

Die Erfindung betrifft eine Lebensmittelbearbeitungsvorrichtung nach dem Oberbegriff des Anspruchs 1.

Aus der Druckschrift US 2013/186286 A1 ist bereits eine derartige Lebensmittelbearbeitungsvorrichtung

Die Aufgabe der Erfindung besteht darin, eine gattungsgemäße Vorrichtung vorteilhaft weiterzuentwickeln. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Durch eine derartige Ausgestaltung kann eine gattungsgemäße Lebensmittelbearbeitungsvorrichtung vorteilhaft weiterentwickelt werden. Insbesondere können vorteilhaft eine Flexibilität und/oder ein Bedienkomfort erhöht werden. Durch das magnetische Befestigungselement kann für einen Nutzer vorteilhaft eine insbesondere einfache und/oder intuitive und/oder schnelle Methode zu einem Befestigen und/oder Lösen des Rührelements an der Antriebseinheit bereitgestellt werden. Ferner ist eine Reinigung der Rühreinheit vorteilhaft vereinfacht, da durch die magnetische Befestigung auf geometrische Formen an der Rühreinheit und/oder der Befestigungseinheit, welche zu starken und/oder schwer zu entfernenden Verschmutzungen neigen und/oder schlecht zugänglich sind, wie beispielsweise scharfe Kanten und/oder Materialvertiefungen, verzichtet werden kann. Zudem ist vorteilhaft ein hoher Schutz der Antriebseinheit vor Beschädigungen, welche beispielsweise durch ein Eintreten von Feuchtigkeit und/oder Schmutz hervorgerufen werden können, gewährleistet, indem die Antriebseinheit vollständig eingehaust ist. Durch eine vollständige Einhausung ist ferner vorteilhaft ein besonders geräuscharmer Betrieb der Antriebseinheit ermöglicht. Dadurch, dass die Antriebseinheit in einem oberen Bereich angeordnet ist, kann vorteilhaft eine Flexibilität verbessert werden. Insbesondere ist denkbar, dass die Antriebseinheit in einem Deckel für ein Lebensmittelbearbeitungsgeschirr angeordnet und/oder mit diesem verbunden werden kann. Ferner kann die Lebensmittelbearbeitungsvorrichtung eine Anbringungseinheit aufweisen um, insbesondere magnetisch, mit einem herkömmlichen Lebensmittelbearbeitungsgeschirr verbunden zu werden, wodurch vorteilhaft die Lebensmittelbearbeitungsvorrichtung mit einer Vielzahl unterschiedlicher Lebensmittelbearbeitungsgeschirre nutzbar ist.

Unter einer "Lebensmittelbearbeitungsvorrichtung" soll insbesondere zumindest ein Teil, insbesondere eine Unterbaugruppe, eines Lebensmittelbearbeitungsgeschirrs, insbesondere eines Gargeschirrs, und/oder zumindest ein Zubehörteil für ein Lebensmittelbearbeitungsgeschirr verstanden werden. Beispielsweise könnte das Lebensmittelbearbeitungsgeschirr, insbesondere im Fall, in welchem die Lebensmittelbearbeitungsvorrichtung Teil des Lebensmittelbearbeitungsgeschirrs ist, die Lebensmittelbearbeitungsvorrichtung aufweisen. Insbesondere alternativ oder zusätzlich, könnte die Lebensmittelbearbeitungsvorrichtung insbesondere als Zubehör des Lebensmittelbearbeitungsgeschirrs ausgebildet und insbesondere zu einem Gebrauch mit dem Lebensmittelbearbeitungsgeschirr vorgesehen sein.

Unter einem "Lebensmittelbearbeitungsgeschirr" soll insbesondere eine Einheit verstanden werden, welche insbesondere zumindest einen Lebensmittelaufnahmeraum zu einer Aufnahme und Bearbeitung zumindest eines Lebensmittels wenigstens teilweise definiert und/oder begrenzt. Das Lebensmittelbearbeitungsgeschirr kann insbesondere als ein Gargeschirr ausgebildet und insbesondere zu einer Beheizung, insbesondere durch zumindest eine Heizeinheit, insbesondere zumindest eines Garsystems und/oder zumindest eines Gargeräts, vorgesehen sein. Das Gargeschirr kann insbesondere dazu vorgesehen sein, mittels einer durch die Beheizung aufgenommenen Energie zumindest ein in dem Lebensmittelaufnahmeraum angeordnetes Lebensmittel zu erhitzen und/oder zu garen und/oder warmzuhalten. Beispielsweise könnte das Gargeschirr zu einem Einbringen in zumindest einen Garraum, insbesondere eines als Ofen ausgebildeten Gargeräts, vorgesehen sein. Vorzugsweise ist das Gargeschirr zu einem Aufstellen auf zumindest einer Aufstellplatte, insbesondere zum Zweck einer Beheizung, vorgesehen. Das Gargeschirr könnte beispielsweise zumindest einen Topf und/oder zumindest eine Pfanne und/oder zumindest ein Backblech aufweisen. Alternativ oder zusätzlich könnte das Lebensmittelbearbeitungsgeschirr als ein von einem Gargeschirr verschiedenes Geschirr ausgebildet, und insbesondere nicht zu einer Beheizung vorgesehen, sein. Beispielsweise könnte das Lebensmittelbearbeitungsgeschirr als eine Rührschüssel und/oder als ein Mixbecher und/oder als ein sonstiges Geschirr mit zumindest einem Lebensmittelaufnahmeraum ausgebildet sein. Unter der Wendung, dass ein Objekt den Lebensmittelaufnahmeraum "wenigstens teilweise" begrenzt, soll insbesondere verstanden werden, dass das Objekt den Lebensmittelaufnahmeraum alleine oder gemeinsam mit zumindest einem weiteren Objekt begrenzt. Das Objekt und/oder das weitere Objekt könnte beispielsweise das Lebensmittelbearbeitungsgeschirr und/oder zumindest ein Deckel des Lebensmittelbearbeitungsgeschirrs und/oder zumindest eine Gehäuseeinheit, insbesondere der Lebensmittelbearbeitungsvorrichtung, sein.

Unter einer "Rühreinheit" soll insbesondere eine Einheit verstanden werden, welche, insbesondere mittels des Rührelements, dazu vorgesehen ist, zumindest ein Lebensmittel in eine Bewegung relativ zu dem Lebensmittelaufnahmeraum zu versetzen, insbesondere umzurühren und/oder zu verrühren und/oder zu mixen und/oder zu verquirlen und/oder aufzulockern. Unter einem "Rührelement" soll insbesondere ein Element verstanden werden, welches in dem Betriebszustand zumindest ein Lebensmittel in eine Relativbewegung zu dem Lebensmittelaufnahmeraum versetzt, insbesondere umrührt und/oder verrührt und/oder mixt und/oder verquirlt und/oder auflockert und welches insbesondere in dem Betriebszustand wenigstens abschnittsweise in Kontakt mit dem Lebensmittel angeordnet ist. Unter der Wendung, dass das Rührelement in dem Betriebszustand "wenigstens abschnittsweise" in Kontakt mit dem Lebensmittel angeordnet ist, soll insbesondere verstanden werden, dass das Rührelement zumindest einen Abschnitt aufweist, welcher in dem Betriebszustand in Kontakt mit dem Lebensmittel angeordnet ist, und insbesondere zumindest einen weiteren Abschnitt aufweisen könnte, welcher in dem Betriebszustand frei von einem Kontakt mit dem Lebensmittel sein könnte.

Unter einer "Antriebseinheit" soll insbesondere eine Einheit verstanden werden, welche in dem Betriebszustand zumindest ein Antriebsmoment, insbesondere ein Antriebsdrehmoment, und/oder zumindest eine Antriebskraft zu einer Bewegung der Rühreinheit, insbesondere des Rührelements der Rühreinheit, insbesondere entlang einer Bewegungsbahn und/oder um eine Bewegungsachse herum, bereitstellt. Beispielsweise könnte die Antriebseinheit zumindest einen Antriebsmotor aufweisen, welcher insbesondere das Antriebsmoment und/oder die Antriebskraft bereitstellen könnte und welcher beispielsweise als ein Elektromotor ausgebildet sein könnte. Die Antriebseinheit könnte insbesondere ein Getriebe aufweisen. Das Getriebe ist insbesondere zu einer Einstellung des an die Rühreinheit, insbesondere des an das Rührelement der Rühreinheit, bereitgestellten Antriebsmoments vorgesehen. Das Getriebe könnte insbesondere als ein Zahnradgetriebe ausgebildet sein. Zu einer vorteilhaften Verminderung von Reibungsverlusten ist insbesondere denkbar, dass das Getriebe als ein Magnetgetriebe ausgebildet ist. Das Magnetgetriebe könnte insbesondere eine erste Reihe aus einer ersten Anzahl von benachbart angeordneten Magnetpaaren aufweisen, welche mit einer Antriebswelle der Antriebseinheit verbunden sind, und welche über ein Wälzlager mit einer zweiten Reihe mit einer zweiten, insbesondere gegenüber der ersten Anzahl größeren, Anzahl von Magnetpaaren mit einer Abtriebswelle der Antriebseinheit gekoppelt sind.

Darunter, dass die Antriebseinheit in einem "oberen Bereich" angeordnet ist soll insbesondere verstanden werden, dass eine längste Kante der Rühreinheit, insbesondere des Rührelements, in einem montierten Zustand der Lebensmittelbearbeitungsvorrichtung, zu wenigstens einem Großteil unterhalb einer Haupterstreckungsebene der Antriebseinheit angeordnet ist. Insbesondere liegt die Haupterstreckungsebene der Antriebseinheit in dem montierten Zustand oberhalb einer Öffnungsebene des Lebensmittelaufnahmeraums des Lebensmittelbearbeitungsgeschirrs, welches die Lebensmittelbearbeitungsvorrichtung aufweist und/oder an welchem die Lebensmittelbearbeitungsvorrichtung zu einer Nutzung angebracht ist.

Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden.

Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Die Bewegungsbahn der Rühreinheit könnte beispielsweise eine offene Bahn sein. Beispielsweise könnte die Antriebseinheit die Rühreinheit in dem Betriebszustand entlang einer offenen Bewegungsbahn bewegen und insbesondere entlang einer Strecke, welche sich insbesondere zwischen zumindest zwei, insbesondere voneinander verschiedenen, Endpunkten der Bewegungsbahn erstreckt. Insbesondere könnte die Antriebseinheit die Bewegung des Rührelements entlang der offenen Bewegungsbahn in zumindest einem der und vorteilhaft in jedem der Endpunkte stoppen, um insbesondere eine Bewegung der Rühreinheit umzukehren. Vorzugsweise ist die Bewegungsbahn eine geschlossene Bewegungsbahn. Vorzugsweise ist die geschlossene Bewegungsbahn zumindest im Wesentlichen kreisförmig. Die Antriebseinheit bewegt die Rühreinheit in dem Betriebszustand insbesondere entlang einer geschlossenen Bewegungsbahn, und zwar insbesondere unter Vermeidung einer Umkehrung und/oder eines Anhaltens und/oder eines Stopps. Insbesondere bewegt die Antriebseinheit in dem Betriebszustand die Rühreinheit periodisch entlang der Bewegungsbahn.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Es wird erfindungsgemäss vorgesehen, dass das Rührelement als ein wandgängiges Rührelement ausgebildet ist. Hierdurch kann vorteilhaft ein Rührergebnis verbessert werden. Insbesondere kann vorteilhaft eine besonders gleichmäßige Durchmischung von Lebensmitteln erreicht werden. Insbesondere kann vorteilhaft ein Anhaften von Lebensmitteln an einer Wandung, insbesondere an einer Seitenwandung des Lebensmittelbearbeitungsgeschirrs, verringert, insbesondere weitestgehend vollständig verhindert, werden. Unter einem "wandgängigen" Rührelement soll ein Rührelement verstanden werden welches zumindest einen Teilbereich aufweist, welcher sich in dem Betriebszustand der Lebensmittelbearbeitungsvorrichtung, insbesondere durch das von der Antriebseinheit bereitgestellte Antriebsdrehmoment, auf einer Bewegungsbahn entlang einer Wandung, insbesondere entlang einer Seitenwandung, des Lebensmittelbearbeitungsgeschirrs bewegt. Die Bewegungsbahn des Teilbereichs des wandgängigen Rührelements ist insbesondere wenigstens im Wesentlichen parallel zu der Wandung, insbesondere zu der Seitenwandung, des Lebensmittelbearbeitungsgeschirrs ausgerichtet und verläuft in einem Nahbereich der Wandung, insbesondere der Seitenwandung, des Lebensmittelbearbeitungsgeschirrs. Des Weiteren wird vorgeschlagen, dass die Befestigungseinheit eine Positionierungseinheit aufweist, welche dazu vorgesehen ist, eine Positionierung des magnetischen Befestigungselements zu unterstützen. Durch eine derartige Ausgestaltung kann vorteilhaft ein Bedienkomfort für einen Nutzer weiter verbessert werden. Insbesondere in Ausgestaltungen mit zumindest einem magnetischen Befestigungselement, welches verdeckt an oder in der Rühreinheit und/oder der Antriebseinheit angeordnet ist, kann durch die Positionierungseinheit eine Positionierung deutlich erleichtert und somit ein Bedienkomfort und/oder ein Bedienerlebnis für den Nutzer deutlich gesteigert werden. Die Positionierungseinheit könnte zu der Unterstützung der Positionierung des magnetischen Befestigungselements beispielsweise zumindest eine Markierung aufweisen, welche insbesondere anzeigt, an welcher Stelle das magnetische Befestigungselement zu positionieren ist. In einer bevorzugten Ausgestaltung ist die Positionierungseinheit insbesondere zu einer automatischen Positionierung des magnetischen Befestigungselements vorgesehen. Beispielsweise ist denkbar, dass die Rühreinheit, insbesondere das Rührelement der Rühreinheit, frei an der Antriebseinheit anordenbar ist, eine Positionierung des magnetischen Befestigungselements an der Antriebseinheit und die magnetische Befestigung der Rühreinheit an der Antriebseinheit mittels des magnetischen Befestigungselements durch die Positionierungseinheit automatisch bei einer Inbetriebnahme der Antriebseinheit erfolgt. In einer weiteren vorteilhaften Ausgestaltung weist die Positionierungseinheit zumindest ein Anzeigeelement auf, welches zu einer Unterstützung der Positionierung des magnetischen Befestigungselements vorgesehen ist und zumindest teilweise einstückig mit der Antriebseinheit ausgebildet ist. Beispielsweise könnte das Anzeigeelement als ein durchsichtiger Bereich der Antriebseinheit ausgebildet sein, durch welchen eine Position zu der Positionierung des magnetischen Befestigungselements sichtbar ist. Zusätzlich könnte in dem durchsichtigen Bereich ein weiteres Anzeigeelement angeordnet sein, welches ein magnetooptisches Material aufweist, welches sich, auf Grund eines magnetooptischen Effekts, verfärbt, sobald das magnetische Befestigungselement in einer geeigneten Position positioniert ist. Alternativ oder zusätzlich könnte die Positionierungseinheit zumindest einen Magnetsensor aufweisen und eine geeignete Positionierung des magnetischen Befestigungselements mittels eines Anzeigeelements, beispielsweise einer LED oder dergleichen, anzeigen.

Zudem wird vorgeschlagen, dass die Antriebseinheit wellenlos ist. Darunter, dass die Antriebseinheit "wellenlos" ist soll insbesondere verstanden werden, dass die Antriebseinheit zumindest ohne eine Abtriebswelle ausgebildet ist und eine Übertragung des Antriebsdrehmoments von der Antriebseinheit auf die Rühreinheit, insbesondere ausschließlich, magnetisch, insbesondere über das magnetische Befestigungselement der Befestigungseinheit, erfolgt. Die wellenlose Antriebseinheit kann zudem insbesondere ohne eine Antriebswelle ausgebildet sein und zu einer Erzeugung des Antriebsmoments ein Magnetfeld bereitstellen. Es wäre beispielsweise denkbar, dass die Antriebseinheit eine Vielzahl gleichmäßig nebeneinander um eine Drehachse angeordnete, jeweils einzeln und zueinander phasenversetzt ansteuerbare Elektromagnete aufweist, welche zu der Erzeugung des Antriebsmoments ein um die Drehachse rotierendes Magnetfeld bereitstellen. Die wellenlose Antriebseinheit kann insbesondere vollständig eingehaust sein. Unter "vollständig eingehaust" soll insbesondere verstanden werden, dass ein Objekt zu allen Seiten von einem geschlossenen Gehäuse umgeben ist, sodass ein Eintritt von Materie zu dem Objekt und/oder ein Austritt von Materie aus dem Objekt durch das Gehäuse im Wesentlichen verhindert ist. Hierdurch kann vorteilhaft ein hoher Schutz der Antriebseinheit vor Beschädigungen, welche beispielsweise durch ein Eintreten von Feuchtigkeit und/oder Schmutz hervorgerufen sein können, ermöglicht werden. Ferner kann vorteilhaft eine hohe Sicherheit für einen Nutzer gewährleistet werden, indem ein unerwünschtes Austreten von Stoffen, beispielsweise von Schmierstoffen, aus der Antriebseinheit verhindert wird. Zudem ist vorteilhaft ein besonders geräuscharmer Betrieb ermöglicht, da in dem Betriebszustand durch die Antriebseinheit verursachte Geräuschemissionen durch das Gehäuse besonders gut abgeschirmt werden können.

Eine Versorgung der Antriebseinheit mit einer Energie könnte insbesondere unmittelbar über eine elektrische und/oder elektromagnetische Verbindung mit einer Stromversorgungsquelle, beispielsweise kabelgebunden über eine elektrisch leitende Kabelverbindung oder drahtlos über ein elektromagnetisches Feld, erfolgen. Vorteilhaft ist, insbesondere zusätzlich zu der unmittelbaren Versorgung der Antriebseinheit mit einer Energie, eine Speicherung von Energie zu einer mittelbaren Versorgung der Antriebseinheit mit Energie vorgesehen. Hierzu wird vorgeschlagen, dass die Lebensmittelbearbeitungsvorrichtung einen Energiespeicher aufweist, welcher die Antriebseinheit in einem Betriebszustand mit einer Energie versorgt. Hierdurch kann vorteilhaft eine besonders flexible Lebensmittelbearbeitungsvorrichtung bereitgestellt werden. Insbesondere kann vorteilhaft eine netzanschlussunabhängige Energieversorgung der Lebensmittelbearbeitungseinheit ermöglicht werden. Unter einem "Energiespeicher" soll insbesondere ein Bauteil verstanden werden, welches Energie, insbesondere chemische und/oder vorzugsweise elektrische Energie aufnehmen, speichern und abgeben kann. Insbesondere kann der Energiespeicher als ein elektrochemischer Kondensator und/oder als eine Brennstoffzelle ausgebildet sein. Vorzugsweise ist der Energiespeicher als ein Batteriespeicher, insbesondere als ein Akkumulator, ausgebildet.

Es wird vorgeschlagen, dass die Befestigungseinheit zumindest ein magnetisches Befestigungselement zu einer magnetischen Befestigung der Rühreinheit an der Antriebseinheit und zumindest ein ferromagnetisches Flussbündelungselement aufweist, welches zu einer Bündelung eines Magnetfelds des magnetischen Befestigungselements vorgesehen ist. Durch eine Bündelung des Magnetfelds des magnetischen Befestigungselements mittels des magnetischen Flussbündelungselements kann vorteilhaft eine magnetische Kraftübertragung eines Antriebsmoments von der Antriebseinheit auf die Rühreinheit verbessert werden. Insbesondere kann eine Lebensmittelbearbeitungsvorrichtung bereitgestellt werden, welche insbesondere auch zu einem Rühren hochviskoser Medien, beispielsweise von Teig, geeignet ist. Hierdurch kann vorteilhaft eine besonders hochwertige und langlebige Lebensmittelbearbeitungsvorrichtung bereitgestellt werden, welche insbesondere ein Bedienerlebnis und/oder ein Qualitätsempfinden für einen Nutzer verbessert. Das ferromagnetische Flussbündelungselement könnte insbesondere als eine ferromagnetische Beschichtung an dem magnetischen Befestigungselement aufgebracht und mit dem magnetischen Befestigungselement zumindest teileweise einstückig ausgebildet, insbesondere stoffschlüssige verbunden, sein. Vorzugsweise ist das magnetische Flussbündelungselement jedoch als ein von dem magnetischen Befestigungselement separates Element ausgebildet und mit diesem insbesondere magnetisch verbunden.

Es wird vorgeschlagen, dass die Lebensmittelbearbeitungsvorrichtung eine von der Antriebseinheit getrennt ausgebildete Führungseinheit mit zumindest einem Führungselement zu einer Führung der Rühreinheit, insbesondere des Rührelements, aufweist. Hierdurch kann vorteilhaft ein Rührergebnis verbessert werden. Insbesondere kann vorteilhaft die Rühreinheit, insbesondere das Rührelement, insbesondere bei hohen Drehzahlen, besonders stabil entlang einer gewünschten Bewegungsbahn und/oder um eine Drehachse herumbewegt werden. Insbesondere kann vorteilhaft ein besonders gleichmäßiges Rühren ermöglicht werden. Unter einer "Führungseinheit" soll insbesondere eine Einheit verstanden werden, welche von der Antriebseinheit und von der Befestigungseinheit getrennt ausgebildet und insbesondere beabstandet zu der Antriebseinheit und der Befestigungseinheit angeordnet ist und welche insbesondere dazu vorgesehen ist, die Rühreinheit, insbesondere das Rührelement der Rühreinheit, bei einer Bewegung, insbesondere einer Drehbewegung entlang der Bewegungsbahn und/oder um eine Drehachse, insbesondere zusätzlich zu der Antriebseinheit und/oder der Befestigungseinheit, zu führen und/oder zu stützen und/oder zu stabilisieren.

Die Führungseinheit könnte insbesondere ausschließlich und insbesondere einstückig mit der Rühreinheit verbunden sein. Vorteilhaft wird vorgeschlagen, dass die Lebensmittelbearbeitungsvorrichtung eine Lebensmittelaufnahmeeinheit aufweist, welche zumindest teilweise einstückig mit der Führungseinheit ausgebildet ist. Hierdurch kann vorteilhaft eine insbesondere zuverlässige Führung der Rühreinheit ermöglicht sein. Insbesondere kann die Bewegungsbahn und/oder die Drehachse der Rühreinheit speziell auf die Lebensmittelaufnahmeeinheit angepasst sein. Unter einer "Lebensmittelaufnahmeeinheit" soll insbesondere eine Einheit verstanden werden, welche zu einer Aufnahme und Bearbeitung zumindest eines Lebensmittels vorgesehen ist. Die Lebensmittelaufnahmeeinheit kann insbesondere den Lebensmittelaufnahmeraum aufweisen. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling

Zudem wird vorgeschlagen, dass die Führungseinheit eine Rotationsachse für die Rühreinheit definiert. Hierdurch kann vorteilhaft eine insbesondere zuverlässig geführte Rotationsbewegung der Rühreinheit, insbesondere des Rührelements, sichergestellt werden, wodurch ferner vorteilhaft ein insbesondere gleichmäßiges Rührergebnis erzielt werden kann.

Ferner wird vorgeschlagen, dass das Führungselement als ein magnetisches Teilelement des Rührelements ausgebildet ist. Hierdurch kann vorteilhaft eine Führung des Rührelements mit besonders einfachen technischen Mitteln ermöglicht und/oder verbessert werden. Insbesondere ist denkbar, dass die Führungseinheit mehrere Führungselemente aufweist, welche insbesondere magnetisch ausgebildet sind.

Es wird erfindungsgemäss vorgesehen, dass die Rühreinheit zumindest ein Ergänzungselement aufweist, welches magnetisch an dem Rührelement anbringbar ist und welches wandgängig ist. Hierdurch kann vorteilhaft eine hohe Flexibilität ermöglicht werden. Insbesondere kann ein Nutzer das Rührelement vorteilhaft individuell und flexibel an eine jeweilige Betriebssituation, insbesondere im Hinblick auf verschiedene Konsistenzen von Lebensmitteln und/oder eine Größe eines Lebensmittelbearbeitungsgeschirrs, anpassen. Unter einem "Ergänzungselement" soll insbesondere ein Element der Rühreinheit verstanden werden, welches dazu vorgesehen ist, das Rührelement um zumindest einen Einwirkungsbereich und/oder um zumindest eine Funktion zu ergänzen und/oder zu erweitern. Das Ergänzungselement kann insbesondere dazu vorgesehen sein, einen Einwirkungsbereich des Rührelements auf ein zu bearbeitendes Lebensmittel und/oder eine Rührfunktion des Rührelements zu erweitern und/oder zu ergänzen. Beispielsweise ist denkbar, dass das Ergänzungselement als eine Verlängerung des Rührelements ausgebildet ist, um einen Rührdurchmesser des Rührelements zu vergrößern und somit ein gleichmäßigeres Rührergebnis, insbesondere bei einer Verwendung der Lebensmittelbearbeitungsvorrichtung mit einem Lebensmittelbearbeitungsgeschirr mit einem sehr großen Durchmesser, zu erzielen. Ferner wäre beispielsweise denkbar, dass das Ergänzungselement als eine Finne ausgebildet ist, um eine Rührfunktion zu erweitern, beispielsweise um ein Rühren von hochviskosen Lebensmitteln zu ermöglichen und/oder zu erleichtern. Insbesondere weist die Rühreinheit zumindest ein weiteres Ergänzungselement auf, welches magnetisch an dem Rührelement anbringbar ist und welches sich von dem Ergänzungselement zumindest hinsichtlich einer Geometrie unterscheidet. Vorteilhaft weist die Rühreinheit eine Vielzahl an unterschiedlichen weiteren Ergänzungselementen auf.

Die Lebensmittelbearbeitungsvorrichtung könnte insbesondere Teil des Lebensbearbeitungsgeschirrs sein und insbesondere fest mit diesem verbunden sein. Vorteilhaft weist die Lebensmittelbearbeitungsvorrichtung jedoch eine Anbringungseinheit zu einer magnetischen Anbringung an einem Lebensmittelbearbeitungsgeschirr auf. Hierdurch kann vorteilhaft eine Flexibilität gesteigert werden. Insbesondere kann die Lebensmittelbearbeitungsvorrichtung vorteilhaft mit einer Vielzahl an unterschiedlichen Lebensmittelbearbeitungsgeschirren genutzt werden. Durch die magnetische Anbringung kann zudem für einen Nutzer vorteilhaft eine insbesondere einfache und/oder intuitive Montage und/oder Demontage der Lebensmittelbearbeitungsvorrichtung an einem Lebensmittelbearbeitungsgeschirr ermöglicht werden. Alternativ wäre denkbar, dass die Anbringungseinheit zu einer Anbringung an dem Lebensmittelbearbeitungsgeschirr auf eine von einer magnetischen Anbringung verschiedene Art und Weise, beispielsweise mittels einer form- und/oder kraftschlüssigen Verbindung, etwa über einen Spannmechanismus oder mittels einer Rastverbindung, vorgesehen ist.

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination.

Es zeigen:
- Fig. 1: ein Zubehör für ein Lebensmittelbearbeitungsgeschirr mit einer Lebensmittelbearbeitungsvorrichtung in einer schematischen Draufsicht,
- Fig. 2: eine schematischen Schnittdarstellung der Lebensmittelbearbeitungsvorrichtung,
- Fig. 3: eine schematische Ansicht eines Lebensmittelbearbeitungsgeschirrs mit einer Lebensmittelbearbeitungsvorrichtung in einem weiteren Ausführungsbeispiel,
- Fig. 4: eine schematische Schnittdarstellung der Lebensmittelbearbeitungsvorrichtung aus Fig. 3,
- Fig. 5: eine schematische Ansicht eines Lebensmittelbearbeitungsgeschirrs mit einer Lebensmittelbearbeitungsvorrichtung in einem weiteren Ausführungsbeispiel,
- Fig. 6: eine schematische Ansicht eines Lebensmittelbearbeitungsgeschirrs mit einer Lebensmittelbearbeitungsvorrichtung in einem weiteren Ausführungsbeispiel, und
- Fig. 7: die Lebensmittelbearbeitungsvorrichtung des Ausführungsbeispiels der Fig. 6 in einer weiteren schematischen Ansicht.

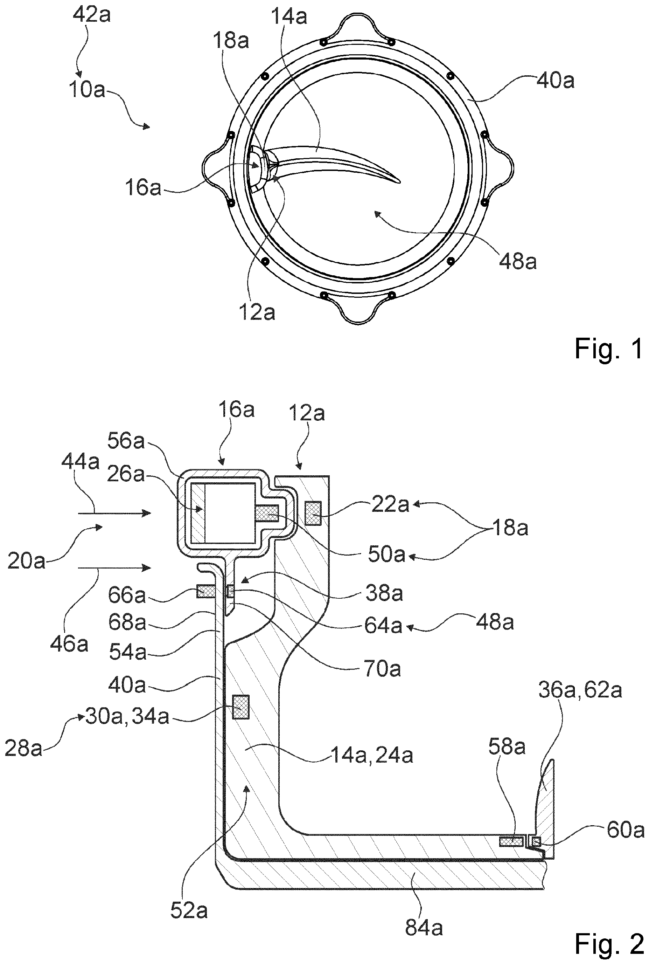

Figur 1 zeigt ein Zubehör 42a für ein Lebensmittelbearbeitungsgeschirr 40a. Das Lebensmittelbearbeitungsgeschirr 40a ist als ein ferromagnetisches Gargeschirr ausgebildet. Das Zubehör 42a weist eine Lebensmittelbearbeitungsvorrichtung 10a auf. Die Lebensmittelbearbeitungsvorrichtung 10a umfasst eine Rühreinheit 12a. Die Rühreinheit 12a umfasst ein Rührelement 14a.

Die Lebensmittelbearbeitungsvorrichtung 10a umfasst eine Antriebseinheit 16a. Die Antriebseinheit 16a ist zu einem Antrieb der Rühreinheit 12a in einem Betriebszustand der Lebensmittelbearbeitungsvorrichtung 10a vorgesehen.

Die Lebensmittelbearbeitungsvorrichtung 10a umfasst eine Befestigungseinheit 18a. Die Befestigungseinheit 18a ist zu einer Befestigung der Rühreinheit 12a an der Antriebseinheit 16a vorgesehen.

Figur 2 zeigt eine schematische Schnittdarstellung der Lebensmittelbearbeitungsvorrichtung 10a. Der Schnitt verläuft durch die Rühreinheit 12a, die Antriebseinheit 16a und die Befestigungseinheit 18a der Lebensmittelbearbeitungsvorrichtung 10a sowie durch das Lebensmittelbearbeitungsgeschirr 40a.

Figur 2 ist zu entnehmen, dass die Antriebseinheit 16a in einem Betriebszustand in einem oberen Bereich 20a angeordnet ist. Eine Haupterstreckungsebene 44a der Antriebseinheit 16a liegt in dem Betriebszustand in dem oberen Bereich 20a. Die Haupterstreckungsebene 44a der Antriebseinheit 16a erstreckt sich in dem Betriebszustand oberhalb einer Öffnungsebene 46a, welche einen Lebensmittelaufnahmeraum 48a des Lebensmittelbearbeitungsgeschirrs 40a nach oben begrenzt. Die Haupterstreckungsebene 44a der Antriebseinheit 16a erstreckt sich im Wesentlichen parallel zu der Öffnungsebene 46a des Lebensmittelbearbeitungsgeschirrs 40a.

Die Befestigungseinheit 18a der Lebensmittelbearbeitungsvorrichtung 10a weist ein erstes magnetisches Befestigungselement 22a auf. Das erste magnetische Befestigungselement ist als ein Permanentmagnet ausgebildet. Das erste magnetische Befestigungselement 22a ist an der Rühreinheit 12a angeordnet. Das erste magnetische Befestigungselement 22a ist zu einer magnetischen Befestigung der Rühreinheit 12a an der Antriebseinheit 16a vorgesehen. Die Befestigungseinheit 18a weist ein zweites magnetisches Befestigungselement 50a auf. Das zweite magnetische Befestigungselement 50a ist als ein weiterer Permanentmagnet ausgebildet. Das zweite magnetische Befestigungselement 50a ist an der Antriebseinheit 16a angeordnet. In dem Betriebszustand ist die Rühreinheit 12a mittels des ersten magnetischen Befestigungselements 22a an der Antriebseinheit 16a befestigt. In dem Betriebszustand üben das erste magnetische Befestigungselement 22a und das zweite magnetische Befestigungselement 50a zu der magnetischen Befestigung eine wechselseitige magnetische Anziehungskraft aufeinander aus.

Die Antriebseinheit 16a der Lebensmittelbearbeitungsvorrichtung 10a ist wellenlos. Die wellenlose Antriebseinheit 16a ist ohne eine Abtriebswelle ausgebildet. Ein in dem Betriebszustand durch die Antriebseinheit 16a zu dem Betrieb der Rühreinheit 12a bereitgestelltes Antriebsmoment wird wellenlos und zwar magnetisch übertragen. In dem Betriebszustand überträgt das an der Antriebseinheit 16a angeordnete zweite magnetische Befestigungselement 50a der Befestigungseinheit 18a das Antriebsmoment magnetisch an das an der Rühreinheit 12a angeordnete erste magnetische Befestigungselement 22a der Befestigungseinheit 18a.

Die Lebensmittelbearbeitungsvorrichtung 10a weist ein Gehäuse 56a auf. Die Antriebseinheit 16a ist in dem Gehäuse 56a vollständig eingehaust. Durch das Gehäuse 56a ist die Antriebseinheit 16a vor einem Eintritt von Feuchtigkeit, insbesondere durch Lebensmittel, geschützt.

Das Rührelement 14a der Rühreinheit 12a der Lebensmittelbearbeitungsvorrichtung 10a ist als ein wandgängiges Rührelement 24a ausgebildet. Das wandgängige Rührelement 24a weist einen Teilbereich 52a auf. In dem Betriebszustand bewegt sich der Teilbereich 52a auf einer Bewegungsbahn (nicht dargestellt) entlang einer Seitenwandung 54a des Lebensmittelbearbeitungsgeschirrs 40a.

Die Lebensmittelbearbeitungsvorrichtung 10a weist einen Energiespeicher 26a auf. Der Energiespeicher 26a ist als ein Akkumulator, und zwar als ein Lithium-Ionen-Akkumulator, ausgebildet. Der Energiespeicher 26a ist dazu vorgesehen, eine Energie aufzunehmen, zu speichern und zu einem späteren Zeitpunkt wieder abzugeben. In dem Betriebszustand gibt der Energiespeicher 26a die gespeicherte Energie ab und versorgt die Antriebseinheit 16a mit der Energie.

Die Lebensmittelbearbeitungsvorrichtung 10a weist eine Führungseinheit 28a auf. Die Führungseinheit 28a ist von der Antriebseinheit 16a getrennt ausgebildet. Die Führungseinheit 28a weist ein Führungselement 30a auf. Das Führungselement 30a der Führungseinheit 28a ist zu einer Führung der Rühreinheit 12a vorgesehen. Das Führungselement 30a ist als ein magnetisches Teilelement 34a des Rührelements 14a der Rühreinheit 12a ausgebildet. Das magnetische Teilelement 34a ist in dem Teilbereich 52a des Rührelements 14a angeordnet. In dem Betriebszustand führt das Führungselement 30a der Führungseinheit 28a die Rühreinheit 12a auf der Bewegungsbahn (nicht dargestellt). Insbesondere führt in dem Betriebszustand das als magnetisches Teilelement 34a des Rührelements 14a ausgebildete Führungselement 30a den Teilbereich 52a des Rührelements 14a entlang der Seitenwandung 54a des Lebensmittelbearbeitungsgeschirrs 40a, indem das magnetische Teilelement 34a eine magnetische Anziehungskraft auf die ferromagnetische Seitenwandung 54a des Lebensmittelbearbeitungsgeschirrs 40a ausübt.

Die Rühreinheit 12a der Lebensmittelbearbeitungsvorrichtung 10a weist ein Ergänzungselement 36a auf. Das Ergänzungselement 36a ist magnetisch an dem Rührelement 14a der Rühreinheit 12a anbringbar. Das Rührelement 14a weist einen Ergänzungsmagneten 58a auf. Das Ergänzungselement 36a weist einen weiteren Ergänzungsmagneten 60a auf. Zu einer magnetischen Anbringung des Ergänzungselements 36a an das Rührelement 14a wird das Ergänzungselement 36a in die Nähe des Ergänzungsmagneten 58a des Rührelements gebracht. Der Ergänzungsmagnet 58a und der weitere Ergänzungsmagnet 60a üben eine wechselseitige magnetische Anziehungskraft aufeinander aus, so dass das Ergänzungselement 36a magnetisch an dem Rührelement 14a angebracht ist. Das Ergänzungselement 36a ist als eine Finne 62a ausgebildet. Die Finne 62a ermöglicht ein Rühren von in dem Lebensmittelaufnahmeraum 48a angeordneten Lebensmitteln, welche eine hohe Viskosität aufweisen (nicht dargestellt).

Die Lebensmittelbearbeitungsvorrichtung 10a weist eine Anbringungseinheit 38a auf. Die Anbringungseinheit 38a ist zu einer magnetischen Anbringung der Lebensmittelbearbeitungsvorrichtung 10a an dem Lebensmittelbearbeitungsgeschirr 40a vorgesehen. Die Anbringungseinheit 38a weist ein erstes magnetisches Anbringungselement 64a auf. Das erste magnetische Anbringungselement 64a ist als ein Permanentmagnet ausgebildet. Das erste magnetische Anbringungselement 64a ist in dem Gehäuse 56a, und zwar innerhalb eines Vorsprungs 70a des Gehäuses 56a, angeordnet. In einem angebrachten Zustand ragt der Vorsprung 70a in den Lebensmittelaufnahmeraum 48a des Lebensmittelbearbeitungsgeschirrs 40a hinein. Die Anbringungseinheit 38a weist ein zweites magnetisches Anbringungselement 66a auf. Das zweite magnetische Anbringungselement 66a ist als ein Permanentmagnet ausgebildet. Das zweite magnetische Anbringungselement 66a wird zu der Anbringung an einer Außenwandung 68a des Lebensmittelbearbeitungsgeschirrs 68a auf einer gegenüberliegenden Seite des Vorsprungs 70 angeordnet. In dem angebrachten Zustand üben das erste magnetische Anbringungselement 64a und das zweite magnetische Anbringungselement 66a eine wechselseitige magnetische Anziehungskraft aufeinander aus, so dass die Lebensmittelbearbeitungsvorrichtung 10a mittels der Anbringungseinheit 38a magnetisch und insbesondere drehfest an dem Lebensmittelbearbeitungsgeschirr 40a angebracht ist.

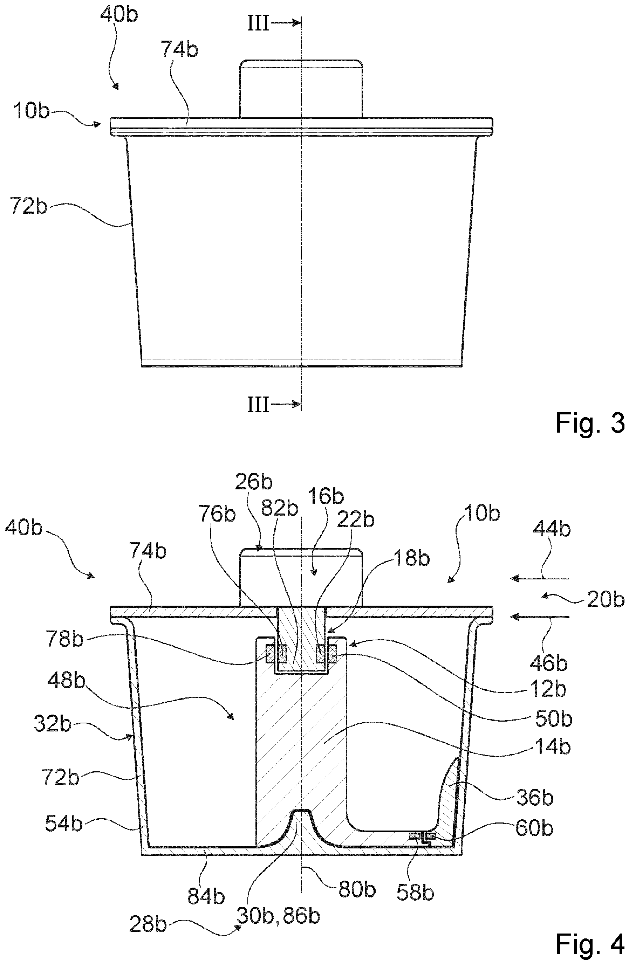

In den Figuren 3 und 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 2 verwiesen werden kann. Zur Unterscheidung der Ausführungsbeispiele ist der Buchstabe a in den Bezugszeichen des Ausführungsbeispiels in den Figuren 1 bis 2 durch den Buchstaben b in den Bezugszeichen des Ausführungsbeispiels der Figuren 3 und 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 2 verwiesen werden.

Figur 3 zeigt ein Lebensmittelbearbeitungsgeschirr 40b. Das Lebensmittelbearbeitungsgeschirr 40b ist als eine Rührschüssel 72b mit einem Deckel 74b ausgebildet. Das Lebensmittelbearbeitungsgeschirr 40b weist eine Lebensmittelbearbeitungsvorrichtung 10b auf.

Figur 4 zeigt eine schematische Schnittdarstellung des Lebensmittelbearbeitungsgeschirrs 40b und der Lebensmittelbearbeitungsvorrichtung 10b entlang einer in der Figur 3 dargestellten Schnittkante III.

Die Lebensmittelbearbeitungsvorrichtung 10b umfasst eine Rühreinheit 12b mit einem Rührelement 14b, eine Antriebseinheit 16b zu einem Antrieb der Rühreinheit 12b und eine Befestigungseinheit 18b ist zu einer Befestigung der Rühreinheit 12b an der Antriebseinheit 16b. Die Antriebseinheit 16b ist in einem oberen Bereich 20b angeordnet. Eine Haupterstreckungsebene 44b der Antriebseinheit 16b liegt in dem Betriebszustand in dem oberen Bereich 20b und erstreckt sich in dem Betriebszustand oberhalb einer Öffnungsebene 46b, welche einen Lebensmittelaufnahmeraum 48b nach oben begrenzt.

Die Befestigungseinheit 18b der Lebensmittelbearbeitungsvorrichtung 10b weist ein erstes magnetisches Befestigungselement 22b und ein weiteres erstes magnetisches Befestigungselement 76b auf. Die magnetischen Befestigungselemente 22b, 76b sind als Permanentmagnete ausgebildet und an der Rühreinheit 12b angeordnet. Die Befestigungseinheit 18b weist ein zweites magnetisches Befestigungselement 50b und ein weiteres zweites magnetisches Befestigungselement 78b auf. Die magnetischen Befestigungselemente 50b, 78b sind als Permanentmagnete ausgebildet und in einer Abtriebswelle 82b der Antriebseinheit 16b angeordnet. In einem Betriebszustand ist die Rühreinheit 12b üben das erste magnetische Befestigungselement 22b und das zweite magnetische Befestigungselement 50b zu einer magnetischen Befestigung der Rühreinheit 12b an der Antriebseinheit 16b eine wechselseitige magnetische Anziehungskraft aufeinander aus. Zu der magnetischen Befestigung üben das weitere erste magnetische Befestigungselement 76b und das weitere zweite magnetische Befestigungselement eine wechselseitige magnetische Anziehungskraft aufeinander aus.

Die Lebensmittelbearbeitungsvorrichtung 10b weist eine Lebensmittelaufnahmeeinheit 32b auf. Die Lebensmittelaufnahmeeinheit 32b weist eine Seitenwandung 54b und eine Bodenwandung 84b auf. Die Seitenwandung 54b und die Bodenwandung 54b begrenzen den Lebensmittelaufnahmeraum 48b.

Die Lebensmittelbearbeitungsvorrichtung 10b weist eine Führungseinheit 28b auf. Die Führungseinheit 28b ist von der Antriebseinheit 16b getrennt ausgebildet. Die Lebensmittelaufnahmeeinheit 32b ist teilweise einstückig mit der Führungseinheit 28b ausgebildet. Die Führungseinheit 28b weist ein Führungselement 30b auf. Das Führungselement 30b ist zu einer Führung der Rühreinheit 12b vorgesehen. Das Führungselement 30b der Führungseinheit 28b ist einstückig mit der Bodenwandung 54b des Lebensmittelaufnahmeeinheit 32b ausgebildet und zwar als in Richtung des Lebensmittelaufnahmeraums 48b ragende Wölbung 86b der Bodenwandung 54b. Die Führungseinheit 28b definiert eine Rotationsachse 80b für die Rühreinheit 12b. Die Rotationsachse 80b verläuft senkrecht zu der Haupterstreckungsebene 44b der Antriebseinheit 16 b mittig durch die Wölbung 86b. In dem Betriebszustand der Lebensmittelbearbeitungsvorrichtung 10b treibt die Antriebseinheit 16b die Rühreinheit 12b zu einer Rotationsbewegung um die Rotationsachse 80b an.

Die Rühreinheit 12b der Lebensmittelbearbeitungsvorrichtung 10b weist ein Ergänzungselement 36b auf. Das Ergänzungselement 36b ist magnetisch an dem Rührelement 14b der Rühreinheit 12b anbringbar. Das Rührelement 14b weist einen Ergänzungsmagneten 58b auf. Das Ergänzungselement 36b weist einen weiteren Ergänzungsmagneten 60b auf. Zu einer magnetischen Anbringung des Ergänzungselements 36b an das Rührelement 14b wird das Ergänzungselement 36b in die Nähe des Ergänzungsmagneten 58b des Rührelements gebracht. Der Ergänzungsmagnet 58b und der weitere Ergänzungsmagnet 60b üben eine wechselseitige magnetische Anziehungskraft aufeinander aus, so dass das Ergänzungselement 36b magnetisch an dem Rührelement 14b angebracht ist. Das Ergänzungselement 36a ist wandgängig. Wenn das Ergänzungselement 36b an dem Rührelement 14b angebracht ist, bewegt es sich in dem Betriebszustand auf einer Bewegungsbahn (nicht dargestellt) entlang der Seitenwandung 54b der Lebensmittelaufnahmeeinheit 32b.

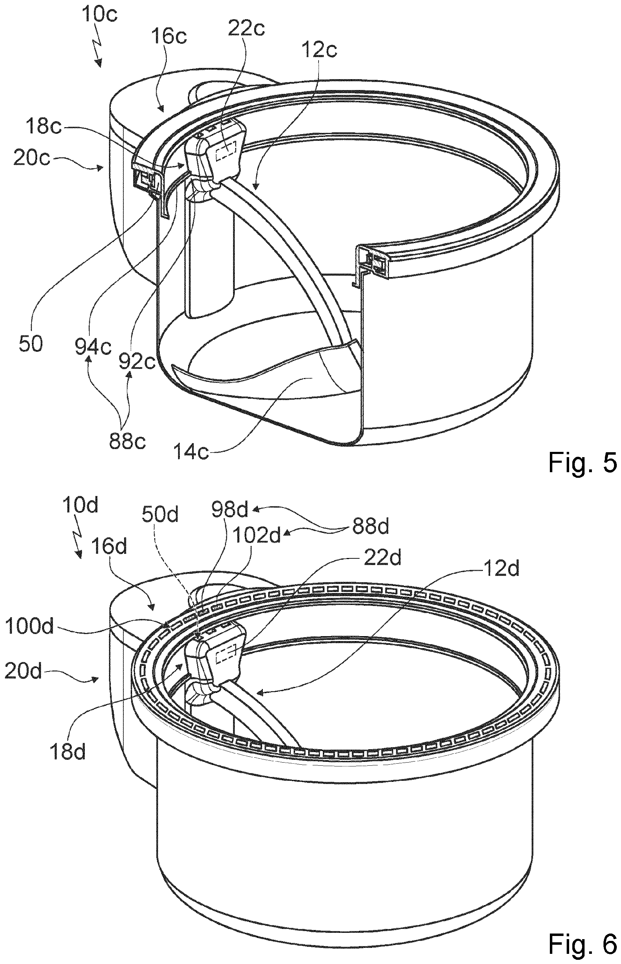

In den Figuren 5 bis 7 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung der Ausführungsbeispiele der Figuren 1 bis 4 verwiesen werden kann. Zur Unterscheidung der Ausführungsbeispiele sind die Buchstaben a und b in den Bezugszeichen der Ausführungsbeispiele in den Figuren 1 bis 4 durch die Buchstaben c und d in den Bezugszeichen der Ausführungsbeispiele der Figuren 3 bis 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der Ausführungsbeispiele der Figuren 1 bis 4 verwiesen werden.

Figur 5 zeigt ein weiteres Ausführungsbeispiel einer Lebensmittelbearbeitungsvorrichtung 10c. Die Lebensmittelbearbeitungsvorrichtung 10c umfasst eine Rühreinheit 12c mit einem Rührelement 14c, eine Antriebseinheit 16c und eine Befestigungseinheit 18c. Die Antriebseinheit 16c ist zu einem Antrieb der Rühreinheit 12c in einem Betriebszustand der Lebensmittelbearbeitungsvorrichtung 10c vorgesehen. Die Antriebseinheit 16c ist in dem Betriebszustand in einem oberen Bereich 20c der Rühreinheit 12c angeordnet.

Die Befestigungseinheit 18c der Lebensmittelbearbeitungsvorrichtung 10c umfasst eine erstes magnetisches Befestigungselement 22c und ein zweites magnetisches Befestigungselement 50c, welche zu einer magnetischen Befestigung der Rühreinheit 12c an der Antriebseinheit 16c vorgesehen sind. Das erste magnetische Befestigungselement 22c ist an der Rühreinheit 12c angeordnet. Das zweite magnetische Befestigungselement 50c ist an der Antriebseinheit 16c angeordnet.

Die Befestigungseinheit 18c der Lebensmittelbearbeitungsvorrichtung 10c weist eine Positionierungseinheit 88c auf. Die Positionierungseinheit 88c ist dazu vorgesehen, eine Positionierung des magnetischen Befestigungselements 22c zu unterstützen. Die Positionierungseinheit 88c, weist ein erstes Positionierungselement 92c auf. Das erste Positionierungselement 92c ist als eine Oberflächenkontur der Rühreinheit 12c ausgebildet und einstückig mit der Rühreinheit 12c ausgebildet. Die Positionierungseinheit 88c weist ein zweites Positionierungselement 94c auf. Das zweite Positionierungselement 94c ist als eine Oberflächenkontur der Antriebseinheit 16c ausgebildet und einstückig mit der Antriebseinheit 16c ausgebildet. Zu der Positionierung des magnetischen Befestigungselements 22c greift das erste Positionierungselement 92c von einer Unterseite 96c der Antriebseinheit 16c in das zweite Positionierungselement 94c an. Hierdurch ist das erste magnetische Befestigungselement 22c automatisch so positioniert, dass bei einer Inbetriebnahme der Antriebseinheit 16c das zweite magnetische Befestigungselement 50c in Bewegung in Richtung des ersten magnetischen Befestigungselements 22c versetzt wird und die magnetische Befestigung automatisch erfolgt, sobald eine wechselseitige magnetische Anziehungskraft zwischen dem ersten magnetischen Befestigungselement 22c und dem zweiten magnetischen Befestigungselement 50c ausreichend groß ist.

Figur 6 zeigt ein weiteres Ausführungsbeispiel einer Lebensmittelbearbeitungsvorrichtung 10d. Die Lebensmittelbearbeitungsvorrichtung 10d umfasst eine Rühreinheit 12d mit einem Rührelement 14d, eine Antriebseinheit 16d und eine Befestigungseinheit 18d. Die Antriebseinheit 16d ist zu einem Antrieb der Rühreinheit 12d in einem Betriebszustand der Lebensmittelbearbeitungsvorrichtung 10d vorgesehen. Die Antriebseinheit 16d ist in dem Betriebszustand in einem oberen Bereich 20d der Rühreinheit 12d angeordnet.

Die Befestigungseinheit 18d der Lebensmittelbearbeitungsvorrichtung 10d weist zumindest ein magnetisches Befestigungselement 22d zu einer magnetischen Befestigung der Rühreinheit 12d an der Antriebseinheit 16d auf. Vorliegend umfasst die Befestigungseinheit 18d ein erstes magnetisches Befestigungselement 22d und ein zweites magnetisches Befestigungselement 50d. Das erste magnetische Befestigungselement 22d ist an der Rühreinheit 12d angeordnet. Das zweite magnetische Befestigungselement 50d ist an der Antriebseinheit 16d angeordnet.

Die Befestigungseinheit 18d der Lebensmittelbearbeitungsvorrichtung 10d weist eine Positionierungseinheit 88d auf. Die Positionierungseinheit 88d ist dazu vorgesehen, eine Positionierung des magnetischen Befestigungselements 22d zu unterstützen. Die Positionierungseinheit 88d weist ein Anzeigeelement 98d auf. Das Anzeigeelement 98d ist einstückig mit der Antriebseinheit 16d ausgebildet und als ein transparenter Bereich an einer Oberseite 100d der Antriebseinheit 16d ausgebildet. Die Positionierungseinheit 88d weist eine weiteres Anzeigeelement 102d auf. Das weitere Anzeigeelement 102d ist als ein leuchtender Aufkleber an dem zweiten magnetischen Befestigungselement 50d ausgebildet. Auf Grund des Anzeigeelements 96d und des weiteren Anzeigeelements 102d der Positionierungseinheit 88d ist eine aktuelle Position des zweiten magnetischen Befestigungselements 50d gut erkennbar, wodurch die Positionierung des ersten magnetischen Befestigungselements 22d zu der Befestigung der Rühreinheit 12d an der Antriebseinheit 16d unterstützt wird.

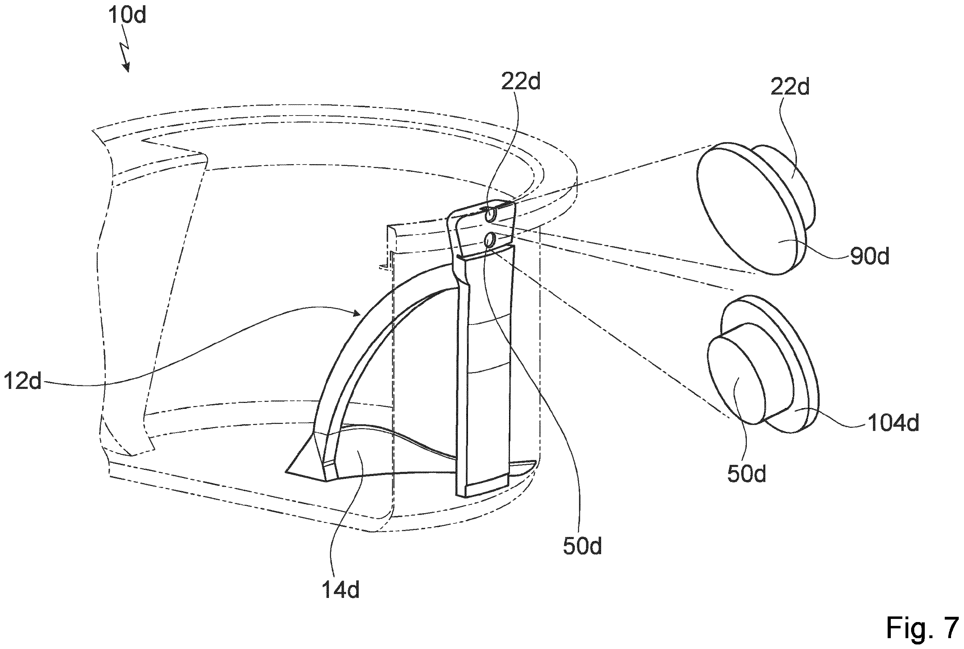

Figur 7 zeigt die Lebensmittelbearbeitungsvorrichtung 10d in einer weiteren schematischen Ansicht. Die Befestigungseinheit 18d der Lebensmittelbearbeitungsvorrichtung 10d weist zumindest ein ferromagnetisches Flussbündelungselement 90d auf, welches zu einer Bündelung eines Magnetfelds des magnetischen Befestigungselements 22d vorgesehen ist. Vorliegend weist die Befestigungseinheit 18d der Lebensmittelbearbeitungsvorrichtung 10d das ferromagnetische Flussbündelungselement 90d zu der Bündelung des Magnetfelds des magnetischen Befestigungselements 22d und ein weiteres ferromagnetisches Flussbündelungselement 104d auf, welches zu einer Bündelung eines Magnetfelds des zweiten magnetischen Befestigungselements 22d vorgesehen ist. Das ferromagnetische Flussbündelungselement 90d und das weitere ferromagnetische Flussbündelungselement 104d sind jeweils als ferromagnetische Platten aus einem ferromagnetischen Metall ausgebildet. Das ferromagnetische Flussbündelungselement 90d ist an dem magnetischen Befestigungselements 22d angeordnet. Das weitere ferromagnetische Flussbündelungselement 104d ist an dem zweiten magnetischen Befestigungselement 50d angeordnet. In einem Befestigungszustand der Rühreinheit 12d an der Antriebseinheit 16d mittels der Befestigungseinheit 18d bündeln das ferromagnetische Flussbündelungselement 90d und das weitere ferromagnetische Flussbündelungselement 104d einen magnetischen Fluss und ermöglichen so eine besonders starke magnetische Befestigung.

### Bezugszeichen

- 10: Lebensmittelbearbeitungsvorrichtung
- 12: Rühreinheit
- 14: Rührelement
- 16: Antriebseinheit
- 18: Befestigungseinheit
- 20: oberer Bereich
- 22: erstes magnetisches Befestigungselement
- 24: wandgängiges Rührelement
- 26: Energiespeicher
- 28: Führungseinheit
- 30: Führungselement
- 32: Lebensmittelaufnahmeeinheit
- 34: magnetisches Teilelement
- 36: Ergänzungselement
- 38: Anbringungseinheit
- 40: Lebensmittelbearbeitungsgeschirr
- 42: Zubehör
- 44: Haupterstreckungsebene
- 46: Öffnungsebene
- 48: Lebensmittelaufnahmeraum
- 50: zweites magnetisches Befestigungselement
- 52: Teilbereich
- 54: Seitenwandung
- 56: Gehäuse
- 58: Ergänzungsmagnet
- 60: weiterer Ergänzungsmagnet
- 62: Finne
- 64: erstes magnetisches Anbringungselement
- 66: zweites magnetisches Anbringungselement
- 68: Außenwandung
- 70: Vorsprung
- 72: Rührschüssel
- 74: Deckel
- 76: weiteres erstes magnetisches Befestigungselement
- 78: weiteres zweites magnetisches Befestigungselement
- 80: Rotationsachse
- 82: Abtriebswelle
- 84: Bodenwandung
- 86: Wölbung
- 88: Positionierungseinheit
- 90: ferromagnetisches Flussbündelungselement
- 92: erstes Positionierungselement
- 94: zweites Positionierungselement
- 96: Unterseite
- 98: Anzeigeelement
- 100: Oberseite
- 102: weiteres Anzeigeelement
- 104: weiteres ferromagnetisches Flussbündelungselement

## Patentansprüche

1. Lebensmittelbearbeitungsvorrichtung (10a; 10b; 10c; 10d), insbesondere Gargeschirrvorrichtung, mit zumindest einer Rühreinheit (12a; 12b; 12c; 12d), umfassend zumindest ein Rührelement (14a; 14b; 14c; 14d), mit zumindest einer Antriebseinheit (16a; 16b; 16c; 16d) zu einem Antrieb der Rühreinheit (12a; 12b; 12c; 12d) und mit zumindest einer Befestigungseinheit (18a; 18b; 18c; 18d) zu einer Befestigung der Rühreinheit (12a; 12b; 12c; 12d) an der Antriebseinheit (16a; 16b, 16c; 16d), wobei die Antriebseinheit (16a; 16b; 16c; 16d) in zumindest einem Betriebszustand zumindest in einem oberen Bereich (20a; 20b; 20c; 20d) der Rühreinheit (12a; 12b, 12c; 12d) angeordnet ist und die Befestigungseinheit (18a; 18b; 18c; 18d) zumindest ein magnetisches Befestigungselement (22a; 22b; 22c; 22d) zu einer magnetischen Befestigung der Rühreinheit (12a; 12b; 12c; 12d) an der Antriebseinheit (16a; 16b; 16c; 16d) aufweist, **dadurch gekennzeichnet, dass** das Rührelement (14a; 14c; 14d) als ein wandgängiges Rührelement (24a; 24c; 24d) ausgebildet ist, oder **dass** die Rühreinheit (12a; 12b) zumindest ein Ergänzungselement (36a; 36b) aufweist, welches magnetisch an dem Rührelement (14a; 14b) anbringbar ist und welches wandgängig ist.

2. Lebensmittelbearbeitungsvorrichtung (10c; 10d) nach Anspruch 1, **dadurch gekennzeichnet, dass** die Befestigungseinheit (18c; 18d) eine Positionierungseinheit (88c; 88d) aufweist, welche dazu vorgesehen ist, eine Positionierung des magnetischen Befestigungselements (22c; 22d) zu unterstützen.

3. Lebensmittelbearbeitungsvorrichtung (10a; 10b; 10c; 10d) nach einem der vorhergehenden Ansprüche, **dadurch gekennzeichnet, dass** die Antriebseinheit (16a; 16b; 16c; 16d) wellenlos ist.

4. Lebensmittelbearbeitungsvorrichtung (10a; 10b; 10c; 10d) nach einem der vorhergehenden Ansprüche, **gekennzeichnet, durch** einen Energiespeicher (26a; 26b; 26c; 26d), welcher die Antriebseinheit (16a; 16b; 16c; 16d) in einem Betriebszustand mit einer Energie versorgt.

5. Lebensmittelbearbeitungsvorrichtung (10d) nach einem der vorhergehenden Ansprüche, **dadurch gekennzeichnet, dass** die Befestigungseinheit (18d) zumindest ein magnetisches Befestigungselement (22d) zu einer magnetischen Befestigung der Rühreinheit (12d) an der Antriebseinheit (16d) und zumindest ein ferromagnetisches Flussbündelungselement (90d) aufweist, welches zu einer Bündelung eines Magnetfelds des magnetischen Befestigungselements (22d) vorgesehen ist.

6. Lebensmittelbearbeitungsvorrichtung (10a; 10b) nach einem der vorhergehenden Ansprüche, **gekennzeichnet durch** eine von der Antriebseinheit (16a; 16b) getrennt ausgebildete Führungseinheit (28a; 28b) mit zumindest einem Führungselement (30a; 30b) zu einer Führung der Rühreinheit (12a; 12b).

7. Lebensmittelbearbeitungsvorrichtung (10b) nach Anspruch 6, **gekennzeichnet durch** eine Lebensmittelaufnahmeeinheit (32b), welche zumindest teilweise einstückig mit der Führungseinheit (28b) ausgebildet ist.

8. Lebensmittelbearbeitungsvorrichtung (10b) nach Anspruch 6 oder 7, **dadurch gekennzeichnet, dass** die Führungseinheit (28b) eine Rotationsachse für die Rühreinheit (12b) definiert.

9. Lebensmittelbearbeitungsvorrichtung (10a) nach einem der Ansprüche 6 bis 8, **dadurch gekennzeichnet, dass** das Führungselement (30a) als ein magnetisches Teilelement (34a) des Rührelements (14a) ausgebildet ist.

10. Lebensmittelbearbeitungsvorrichtung (10a) nach einem der vorherhergehenden Ansprüche, **gekennzeichnet durch** eine Anbringungseinheit (38a) zu einer magnetischen Anbringung an einem Lebensmittelbearbeitungsgeschirr (40a).

11. Lebensmittelbearbeitungsgeschirr (40b), mit einer Lebensmittelbearbeitungsvorrichtung (10b) nach einem der vorhergehenden Ansprüche.

12. Zubehör (42a) für ein Lebensmittelbearbeitungsgeschirr (40a), mit einer Lebensmittelbearbeitungsvorrichtung (10a) nach einem der Ansprüche 1 bis 10.

## Claims

1. Food processing device (10a; 10b; 10c; 10d), in particular cookware device, having at least one stirring unit (12a; 12b; 12c; 12d), comprising at least one stirring element (14a; 14b; 14c; 14d), having at least one drive unit (16a; 16b; 16c; 16d) for driving the stirring unit (12a; 12b; 12c; 12d) and having at least one fastening unit (18a; 18b; 18c; 18d) for fastening the stirring unit (12a; 12b; 12c; 12d) to the drive unit (16a; 16b, 16c; 16d), wherein the drive unit (16a; 16b; 16c; 16d), in at least one operating state, is arranged at least in an upper region (20a; 20b; 20c; 20d) of the stirring unit (12a; 12b, 12c; 12d) and the fastening unit (18a; 18b; 18c; 18d) has at least one magnetic fastening element (22a; 22b; 22c; 22d) for magnetically fastening the stirring unit (12a; 12b; 12c; 12d) to the drive unit (16a; 16b; 16c; 16d), **characterised in that** the stirring element (14a; 14c; 14d) is embodied as a close-clearance stirring element (24a; 24c; 24d), or **that** the stirring unit (12a; 12b) has at least one complementary element (36a; 36b) which can be attached magnetically to the stirring element (14a; 14b) and which has close clearance.

2. Food processing device (10c; 10d) according to claim 1, **characterised in that** the fastening unit (18c; 18d) has a positioning unit (88c; 88d) which is provided to assist with a positioning of the magnetic fastening element (22c; 22d).

3. Food processing device (10a; 10b; 10c; 10d) according to one of the preceding claims, **characterised in that** the drive unit (16a; 16b; 16c; 16d) is shaftless.

4. Food processing device (10a; 10b; 10c; 10d) according to one of the preceding claims, **characterised by** an energy storage unit (26a; 26b; 26c; 26d) which supplies energy to the drive unit (16a; 16b; 16c; 16d) in an operating state.

5. Food processing device (10d) according to one of the preceding claims, **characterised in that** the fastening unit (18d) has at least one magnetic fastening element (22d) for magnetically fastening the stirring unit (12d) to the drive unit (16d) and at least one ferromagnetic flux bundling element (90d), which is provided to bundle a magnetic field of the magnetic fastening element (22d).

6. Food processing device (10a; 10b) according to one of the preceding claims,
**characterised by** a guidance unit (28a; 28b) embodied separately from the drive unit (16a; 16b) with at least one guide element (30a; 30b) for guiding the stirring unit (12a; 12b).

7. Food processing device (10b) according to claim 6, **characterised by** a food receiving unit (32b), which is embodied at least partially in one piece with the guide unit (28b).

8. Food processing device (10b) according to claim 6 or 7, **characterised in that** the guide unit (28b) defines an axis of rotation for the stirring unit (12b).

9. Food processing device (10a) according to one of claims 6 to 8, **characterised in that** the guide element (30a) is embodied as a magnetic subelement (34a) of the stirring element (14a).

10. Food processing device (10a) according to one of the preceding claims, **characterised by** an attachment unit (38a) for magnetic attachment to a food processing tableware item (40a).

11. Food processing tableware (40b), having a food processing device (10b) according to one of the preceding claims.

12. Accessory (42a) for a food processing tableware item (40a), having a food processing device (10a) according to one of claims 1 to 10.

## Revendications

1. Dispositif de traitement d'aliments (10a, 10b, 10c, 10d), en particulier dispositif d'ustensile de cuisson, comprenant au moins une unité d'agitation (12a, 12b, 12c, 12d) comportant au moins un élément d'agitation (14a, 14b, 14c, 14d), au moins un organe d'entraînement (16a, 16b, 16c, 16d) pour entraîner l'unité d'agitation (12a, 12b, 12c, 12d) et au moins un organe de fixation (18a, 18b, 18c, 18d) pour fixer l'unité d'agitation (12a, 12b, 12c, 12d) sur l'organe d'entraînement (16a, 16b, 16c, 16d),
dans lequel l'organe d'entraînement (16a, 16b, 16c, 16d) est disposé, dans au moins un état de fonctionnement, au moins dans une région supérieure (20a, 20b, 20c, 20d) de l'unité d'agitation (12a, 12b, 12c, 12d) et l'organe de fixation (18a, 18b, 18c, 18d) comprend au moins un élément de fixation magnétique (22a, 22b, 22c, 22d) destiné à fixer magnétiquement l'unité d'agitation (12a, 12b, 12c, 12d) sur l'organe d'entraînement (16a, 16b, 16c, 16d),
**caractérisé en ce que** l'élément d'agitation (14a, 14c, 14d) est configuré sous forme d'un élément d'agitation proche de la paroi (24a, 24c, 24d) ou **en ce que** l'unité d'agitation (12a, 12b) comprend au moins un élément auxiliaire (36a, 36b) qui peut être apposé magnétiquement sur l'élément d'agitation (14a, 14b) et qui est proche de la paroi.

2. Dispositif de traitement d'aliments (10c, 10d) selon la revendication 1, **caractérisé en ce que** l'organe de fixation (18c, 18d) comprend un organe de positionnement (88c, 88d) qui est configuré pour soutenir un positionnement de l'élément de fixation magnétique (22c, 22d).

3. Dispositif de traitement d'aliments (10a, 10b, 10c, 10d) selon l'une des revendications précédentes, **caractérisé en ce que** l'organe d'entraînement (16a, 16b, 16c, 16d) est sans arbre.

4. Dispositif de traitement d'aliments (10a, 10b, 10c, 10d) selon l'une des revendications précédentes, **caractérisé par** un accumulateur d'énergie (26a, 26b, 26c, 26d), qui alimente l'organe d'entraînement (16a, 16b, 16c, 16d) avec de l'énergie dans un état de fonctionnement.

5. Dispositif de traitement d'aliments (10d) selon l'une des revendications précédentes, **caractérisé en ce que** l'organe de fixation (18d) comprend au moins un élément de fixation magnétique (22d) pour fixer magnétiquement l'unité d'agitation (12d) sur l'organe d'entraînement (16d) et au moins un élément de focalisation de flux ferromagnétique (90d), qui est configuré pour concentrer un champ magnétique de l'élément de fixation magnétique (22d).

6. Dispositif de traitement d'aliments (10a, 10b) selon l'une des revendications précédentes, **caractérisé par** un organe de guidage (28a, 28b) formé séparément de l'organe d'entraînement (16a, 16b) et comprenant au moins un élément de guidage (30a, 30b) destiné à guider l'unité d'agitation (12a, 12b).

7. Dispositif de traitement d'aliments (10b) selon la revendication 6, **caractérisé par** un bloc de réception d'aliments (32b), qui est formé au moins en partie d'un seul tenant avec l'organe de guidage (28b).

8. Dispositif de traitement d'aliments (10b) selon la revendication 6 ou 7, **caractérisé en ce que** l'organe de guidage (28b) définit un axe de rotation pour l'unité d'agitation (12b).

9. Dispositif de traitement d'aliments (10a) selon l'une des revendications 6 à 8, **caractérisé en ce que** l'élément de guidage (30a) est configuré sous forme d'un sousélément magnétique (34a) de l'élément d'agitation (14a).

10. Dispositif de traitement d'aliments (10a) selon l'une des revendications précédentes, **caractérisé par** une unité de montage (38a) permettant un montage magnétique sur un ustensile de traitement d'aliments (40a).

11. Ustensile de traitement d'aliments (40b), comprenant un dispositif de traitement d'aliments (10b) selon l'une des revendications précédentes.

12. Accessoire (42a) pour un ustensile de traitement d'aliments (40a), comprenant un dispositif de traitement d'aliments (10a) selon l'une des revendications 1 à 10.
